# EUROPEAN PATENT APPLICATION

(11) **EP 4 480 695 A1**
(43) Date of publication of application: **25.12.2024**
(21) Application number: 23179989.1
(22) Date of filing: 19.06.2023
(51) Int. Cl.: B32B 3/04, B32B 3/10, B32B 3/16, B32B 3/26, B32B 3/28, B32B 5/02, B32B 5/08, B32B 5/14, B32B 7/05, B32B 7/12, B32B 27/32

(54) **INSULATION ELEMENT**

(71) Applicant: Saint-Gobain Adfors SA, 92400 Courbevoie (FR)
(72) Inventor: Stude, Ulrich, 92400 Courbevoie (FR); Berginski, Robert, 92400 Courbevoie (FR)
(74) Representative: Von Rohr Patentanwälte Partnerschaft mbB

(57) **Abstract**

The present invention relates to an insulation element for thermal and/or electrical insulation of a rechargeable battery. The insulation element has a first outer layer and a second outer layer, the outer layers being made of an electrically insulating material. Further, the insulation element has at least one intermediate element which is arranged between the outer layers, the intermediate element being made of a textile and/or thermally insulating material, in particular a nonwoven.

According to a first aspect, the insulation element has a central region which is arranged between edge regions of the insulation element, wherein the outer layers are connected to each other in the central region and wherein the central region is arranged between two different sections of the intermediate element or between two intermediate elements.

According to a further aspect, a thickness of the insulation element is reduced in a central region.

According to a further aspect, the insulation element has at least one ventilation channel arranged between the outer layers.

## Description

The present invention relates to an insulation element according to the preamble of claim 1, a rechargeable battery comprising an insulation element and a method for producing an insulation element.

In the present invention, the term "insulation element" is preferably to be understood as a flat and/or sheet-like component with a layered structure, in particular a layer package, which is designed and/or used for the thermal and/or electrical insulation and/or any other shielding of a battery and/or its cells and/or modules. In particular, the insulation element is configured to reduce and/or delay the release of heat to the environment, in particular a vehicle interior, and/or to contain and/or reduce and/or delay the spread of heat in a battery in the event of uncontrolled and/or excessive heat development in the battery, in particular in the case of thermal runaway.

In the present invention, the term "battery" is to be understood as meaning, in particular, a device for providing electrical energy by converting chemical energy. The battery is preferably composed of several interconnected accumulator cells and/or cell blocks, i.e. battery cells and/or battery modules. The battery is preferably a rechargeable battery or accumulator or secondary cell.

In particular, the battery is configured as a traction battery and/or for the drive of electric vehicles and/or as a sodium-ion battery or lithium-ion battery. Here, reliable and/or effective thermal insulation is important in order to protect the vehicle occupants in the event of the battery overheating, for example as a result of a traffic accident, at least until the arrival of rescue services.

Due to their chemical composition, lithium-ion batteries in particular exhibit comparatively high instability. If a local short-circuit of the internal electrodes in a battery cell occurs, for example due to contamination of the separator separating the electrodes by trapped foreign particles and/or mechanical action or damage, the strong short-circuit current heats the battery cell up to 800 °C in a short time, sometimes up to 1300 °C. This process is known as thermal runaway. The thermal runaway of one battery cell can easily and/or quickly spread to other, adjacent battery cells, especially since the separator loses stability at relatively low temperatures, for example above 120 °C, and short circuits can therefore quickly occur in adjacent battery cells. This leads to an unstoppable chain reaction, wherein the energy stored in the battery is released in a short time, usually explosively and/or with the release of toxic gases and with the formation of flames and/or sparks. There is also the risk of the battery bursting when the internal pressure rises accordingly.

Thus, it is desirable to keep a battery cell which is located adjacent to a battery cell subject to thermal runaway and/or overheating as long as possible below a certain limit temperature, preferably 120 °C, in particular 80 °C. Above 80 °C, the aging process of the battery cell is considerably accelerated and above 120 °C the separator in the battery cell often begins to melt, accompanied by irreversible damage and/or short circuits.

Likewise, there is a high demand for efficient and/or long-lasting heat protection of adjacent areas and/or rooms, especially vehicle interiors or passenger cabins, against uncontrolled heat development in the battery. In particular, occupants and/or objects should be protected from heat until rescue and/or recovery measures have been fully completed.

WO 2019/121641 A1 discloses a multi-layer insulation element for a battery for thermal insulation. The insulation element comprises two cover layers which are configured as heat-resistant mica layers and a heat-resistant needled non-woven fiber layer which is arranged between the cover layers.

It is an object of the present invention to provide an insulation element for thermal and/or electrical insulation of a rechargeable battery, wherein different requirements concerning the insulation of the battery, in particular in different regions of the battery, are fulfilled within a single insulation element, in particular wherein the insulation element provides protection against electric arcs and/or a thermal runaway and/or wherein a simple assembly of a battery is enabled or enhanced.

The above object is solved by an insulation element according to claim 1, by a battery according to claim 14 or by a method according to claim 15. Advantageous embodiments are subject of the subclaims.

The insulation element according to the invention is configured for thermal and/or electrical insulation of a rechargeable battery, in particular a lithium-ion battery, a sodium-ion battery and/or a traction battery for an electric vehicle.

The insulation element has a first outer layer and a second outer layer, the outer layers being made of an electrically insulating material. Further, the insulation element has a first edge region adjoining a first edge of the insulation element and a second edge region adjoining a second edge of the insulation element, the first and second edges being arranged on opposite sides of the insulation element.

Preferably, the outer layers preferably are connected to each other, in particular glued or adhesively connected, in the first and second edge regions.

Moreover, the insulation element has at least one intermediate element which is arranged between the outer layers and between the first edge and the second edge, the intermediate element being made of a textile and/or thermally insulating material, in particular a nonwoven.

The insulation element preferably has a central region which is arranged between the first edge region and the second edge region.

According to a first aspect, the outer layers are connected to each other in the central region and the central region is arranged between different sections of the intermediate element or between two intermediate elements in a cross-section transverse to the first and second edges. In this way, different functionalities can be combined in a single insulation element. In particular, thermal insulation is only provided in specific regions and/or a region which is only electrically insulating and/or not thermally insulating is provided. This circumvents the need to provide several or different insulation elements for different requirements. Further, assembly of the battery is made easier.

According to a further, also independently realizable aspect, a thickness of the insulation element is reduced in the central region. By this, the weight, thickness and/or required space of the insulation element is reduced or kept at a minimum. Further, the insulation element can be optimally adapted to a geometry of a battery to be insulated.

Preferably, at least one of the outer layers comprises mica and/or is mica layer. The use of mica is conducive for, one the one hand, providing good electrical insulation properties, in particular for protection against electric arcs or the like., and, on the other hand, for good thermal protection or protection against heat and/or fire.

It is preferred that at least one of the outer layers comprises or is formed by a gas-permeable material and/or a woven glass fiber material. This allows hot gases to permeate the insulation element and/or to leave the battery or a cell thereof insulated with the insulation element, in particular in the case of thermal runaway, while at the same time preventing hot particles and/or sparks from leaving the battery or cell.

In a preferred embodiment, the first outer layer and the second outer layer are made of the same material.

The intermediate element is preferably a stitch-bonded and/or non-woven mat. Preferably, the intermediate element comprises or is made of silicate fibers and/or glass fibers. By providing the intermediate element, thermal insulation is achieved.

The insulation element preferably has an intermediate region. In particular, the region of the insulation element comprising the intermediate element is denoted as the intermediate region. In the intermediate region, the insulation element is preferably thicker than in the central region, preferably by a factor of at least 5, more preferably at least 10, in particular about 15. In other words, the thickness of the insulation element in the intermediate region is preferably at least 5 times, more preferably at least 10 times, in particular about 15 times the thickness in the of the insulation element in the central region.

It is preferred that the first outer layer and/or the second outer layer have a thickness of at most or less than 1 mm, preferably at most or less than 0.5 mm, in particular at most or less than 0.25 mm, most preferred at most or less than 0.2 mm. Particularly preferred thicknesses of the first outer layer and/or second outer layer are about 120 µm or about 160 µm. Further, it is preferred that the first outer layer and the second outer layer have the same thickness.

The intermediate element is preferably thicker than the first outer layer and/or the second outer layer. As an alternative or in addition, the intermediate element has a thickness of at least or more than 1 mm, preferably at least or more than 2 mm, in particular at least or more than 3 mm, most preferred about 3.5 mm.

The discussed (relative) thicknesses are conducive to desired thermal and/or electrical insulation properties and the space available in a battery is optimally utilized while keeping the required space and/or weight of the insulation element at a minimum.

Preferably, the insulation element comprises at least one connection layer connecting the outer layers to each other and/or connecting the intermediate element to at least one of the outer layers. The connection layer is formed by an adhesive foil, in particular an adhesive polyolefin foil. This enhances the production of the insulation element.

According to a further, also independently realizable aspect, the insulation element has at least one ventilation channel, preferably several ventilation channels, arranged between the outer layers. The ventilation channel(s) allow(s) to discharge hot gases, which may occur in the case of thermal runaway of the battery, through the insulation element.

The ventilation channel(s) is/are preferably arranged between the intermediate element and the central region and/or formed by a free space between the first outer layer, the second outer layer and the intermediate element. In particular, the ventilation channel(s) extend(s) parallel to the outer layers and/or parallel to a main extension plane of the insulation element. This allows incorporation of the ventilation channel(s) at low effort.

It is preferred that the insulation element extends along a first main direction from the first edge to the second edge and a second main direction perpendicular to the first main direction, wherein the insulation element has a third edge and a fourth edge, which are arranged on opposite sides of the insulation element in the second main direction. Preferably, the insulation element is open at one or both of the third and fourth edges and/or the intermediate element is arranged between the outer layers at one or both of the third and fourth edges. This allows efficient ventilation and incorporation of the ventilation channel(s) at low effort.

Preferably, the insulation element is at least essentially flat, planar, sheet-like and/or mat-like and/or has an at least essentially rectangular shape.

According to a further aspect, which may also be realized independently, the present invention relates to a rechargeable battery, in particular lithium-ion battery, sodium-ion battery and/or traction battery for an electric vehicle, the battery comprising an insulation element as described herein. The insulation element is preferably arranged between different cells and/or modules of the battery and/or between a housing of the battery and at least one cell and/or module of the battery.

According to a further aspect, which may also be realized independently, the present invention relates to a method for producing an insulation element as described herein.

According to the proposed method, a first electrically insulating material, a second electrically insulating material and an intermediate material are provided, wherein the intermediate material is a textile and/or thermally insulating material, in particular a nonwoven. The first outer layer is made from the first electrically insulating material, the second outer layer is made from the second electrically insulating material and the intermediate element is made from the intermediate material.

According to a first aspect of the proposed method, a lamination apparatus having a calender with several calender rolls is provided, wherein at least one of the calender rolls has a first intermediate section and a second intermediate section each having a first diameter and a central section having a second diameter, wherein the second diameter is greater than the first diameter and the central section is arranged between the first and second intermediate sections, wherein the intermediate material is provided in two separate webs, and wherein the first and second electrically insulating materials and the webs of the intermediate material are introduced between the calender rolls and laminated so that the insulation element is produced.

According to a second aspect of the proposed method, the first electrically insulating material, second electrically insulating material, first intermediate material and second intermediate material are provided as punched or cut-out pieces, wherein a heat press having two opposite pressing surfaces is provided, wherein at least one of the pressing surfaces has a first intermediate section, a second intermediate section and a central section, wherein the central section is arranged between the first and second intermediate sections, wherein the distance between the central section and the opposite pressing surface is less than the distance between the intermediate sections and the opposite pressing surface, and wherein the pieces are placed between the pressing surfaces and pressed so that the insulation element is produced.

The above-mentioned aspects and features of the present invention as well as the aspects and features of the present invention resulting from the claims and the following description can basically be realised independently of each other, but also in any combination and/or sequence. Additional advantages, features, properties and aspects of the present invention result from the claims and the following description of preferred embodiments based on the drawing. It shows:
- Fig. 1: a schematic sectional view of a proposed insulation element;
- Fig. 2: a schematic representation of an electric vehicle with a battery comprising the insulation element;
- Fig. 3: a schematic top view of a proposed insulation element according to a first embodiment;
- Fig. 4: a schematic top view of a proposed insulation element according to a second embodiment;
- Fig. 5: a schematic top view of a proposed insulation element according to a third embodiment;
- Fig. 6: a schematic representation of a lamination apparatus for producing an insulation element;
- Fig. 7: a schematic representation of a calender roll of the lamination apparatus according to Fig. 6;
- Fig. 8: a schematic representation of a heat press for producing an insulation element; and
- Fig. 9: a schematic top view of a pressing surface of the heat press.

In the Figures, the same reference signs are used for identical or similar components and devices, wherein the same or corresponding advantages and properties may result, even if a repeated description is omitted.

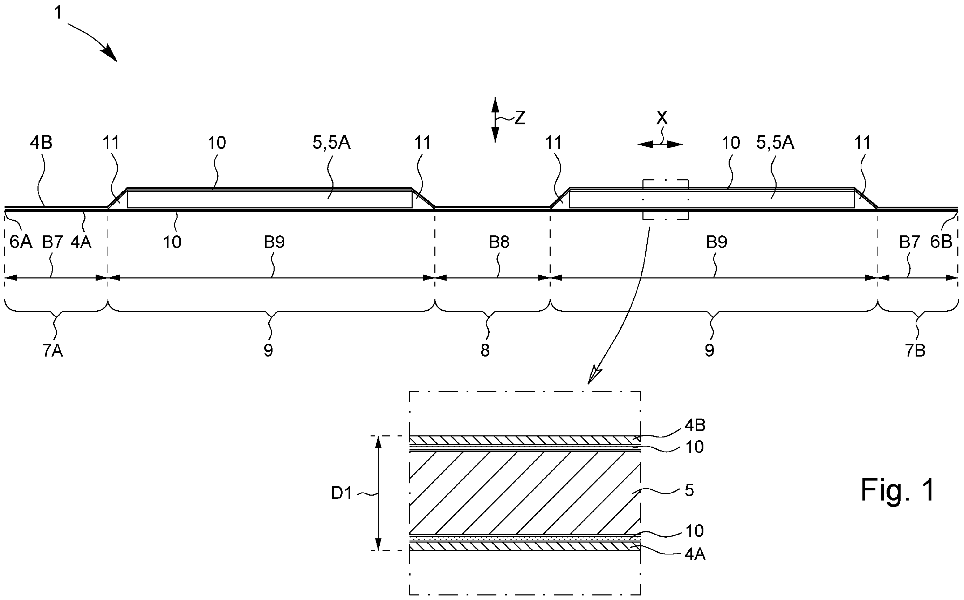

Fig. 1 shows an insulation element 1 according to the proposal in a schematic sectional view. The insulation element 1 is configured for thermal and/or electrical insulation of a battery 2.

The battery 2 is a rechargeable battery. Preferably, the battery 2 is a lithium-ion or sodium-ion battery. In particular, the battery 2 is a traction battery of an electric vehicle 3.

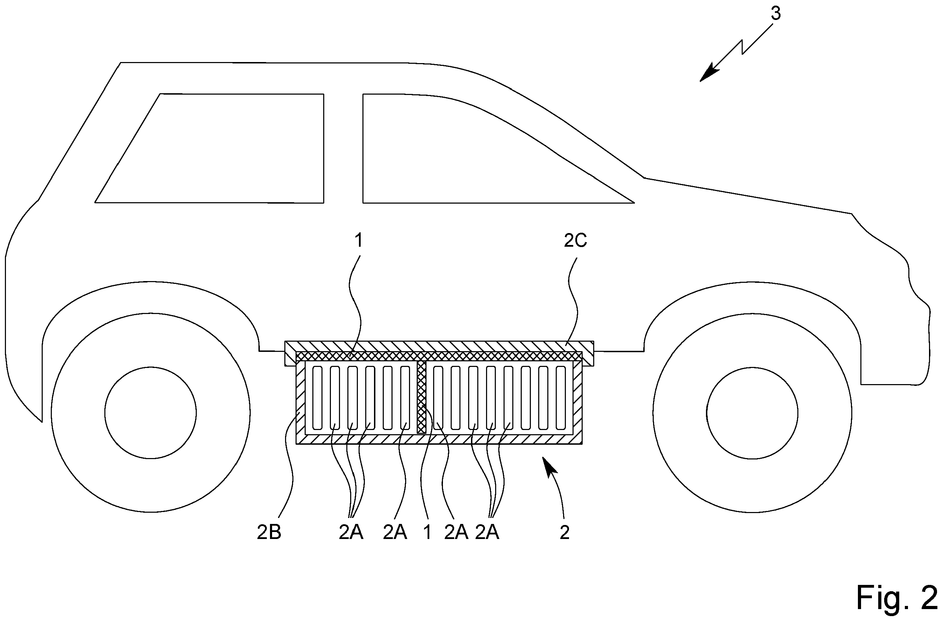

Fig. 2 schematically shows an electric vehicle 3 having a traction battery 2, the traction battery 2 having an insulation element 1.

An electric vehicle in the sense of the present invention preferably is a vehicle, in particular automobile or car, that uses one or more electric motors for propulsion, in particular using only energy stored in one or more batteries. The electric vehicle may be a full electric vehicle or a hybrid electric vehicle (i.e., a vehicle that combines a conventional internal combustion engine system with an electric propulsion system).

A traction battery of an electric vehicle in the sense of the present invention is in particular a rechargeable battery used to power the electric motor or motors of an electric vehicle.

The battery 2 preferably comprises several battery cells 2A arranged in a housing 2B. The battery 2 and/or housing 2B preferably comprises a lid or cover 2C. In the electric vehicle 3, the cover 2C is preferably arranged on an upper side of the battery 2 and/or between the cells 2A and an interior or passenger cabin of the vehicle 3.

The insulation element 1 is preferably arranged inside the housing 2B. Preferably, the insulation element 1 is arranged above the cells 2A or on a side of the cells 2A facing the passenger cabin of the vehicle 3. In particular, the insulation element 1 is arranged between the cells 2A and the cover 2C. As an alternative or in addition, the battery may comprise one or more insulation elements 1 arranged between one or more cells and/or modules of the battery 2.

Fig. 2 shows an example in which the battery 2 comprises an insulation element 1 arranged between the cells 2A and the cover 2C and an insulation element arranged between different cells 2A.

The insulation element 1 has a first outer layer 4A, a second outer layer 4B and at least one intermediate element 5. The intermediate element 5 is arranged between the outer layers 4A, 4B. In particular, the intermediate element 5 is, at least partially or completely, enveloped or enclosed by the outer layers 4A, 4B.

The intermediate element 5 may comprise or consist of different sections 5A, which are explained in more detail later.

The intermediate element(s) 5 and/or sections 5A preferably have a strip-like, elongate and/or at least substantially rectangular shape.

Preferably, the insulation element 1 has or extends in a first main direction X, in the following also briefly denoted as X direction, and a second main direction Y, in the following also briefly denoted as Y direction. The X direction and Y direction are preferably perpendicular to each other. Preferably, the X and Y directions lie in or define a main extension plane of the insulation element 1.

The insulation element 1 is preferably at least essentially flat, planar, sheet-like and/or mat-like. Preferably, the insulation element 1 has an at least substantially rectangular shape.

The first outer layer 4A, intermediate element 5 and second outer layer 4B are arranged one after another in a Z direction, in particular in this order.

The Z direction is preferably perpendicular to the X direction and/or Y direction. In particular, the X, Y and Z direction form a cartesian coordinate system.

The insulation element 1 has a first edge 6A and a second edge 6B. The first and second edges 6A, 6B in particular delimit the insulation element 1 in the X direction. The first and second edges 6A, 6B are arranged on opposite sides of the insulation element 1, in particular on opposite sides in the X direction.

Further, the insulation element 1 has a first edge region 7A adjoining the first edge 6A and a second edge region 7B adjoining the second edge 6B. Preferably, the first edge region 7A extends along and/or parallel to the first edge 6A, in particular at least substantially the complete first edge 6A, and the second edge region 7B extends along and/or parallel to the second edge 6B, in particular at least substantially the complete second edge 6B.

The outer layers 4A, 4B are preferably connected to each other in or along the edge regions 7A, 7B. In particular, the outer layers 4A, 4B are laminated or glued or otherwise adhesively connected to each other in the edge regions 7A, 7B or at least in parts of the edge regions 7A, 7B.

The insulation element 1 preferably has a central region 8. The central region 8 is in particular a region that is arranged at a distance from the first and second edges 6A, 6B and/or edge regions 7A, 7B and/or arranged between the first and second edges 6A, 6B and/or edge regions 7A, 7B.

In the central region 8, the outer layers 4A, 4B are preferably connected to each other, in particular in the same manner as in the edge regions 7A, 7B. Preferably, the central region 8 does not comprise the intermediate element(s) 5 and/or the intermediate element(s) 5 is/are arranged outside the central region 8.

The insulation element 1 preferably has at least two intermediate regions 9. An intermediate region 9 is in particular a region that comprises an intermediate element 5 or a section 5A thereof and/or in which an intermediate element 5 or a section 5A thereof is arranged.

The intermediate regions 9 preferably have an at least substantially strip-like and/or rectangular shape.

Different intermediate regions 9 may comprise different or separate intermediate elements 5 and/or may comprise different sections 5A of the same and/or a coherent intermediate element 5. Different intermediate regions 9 preferably have an at essentially identical design or structure, shape and/or cross-section.

The insulation element 1 may have more than one, in particular two or more, separate intermediate elements 5.

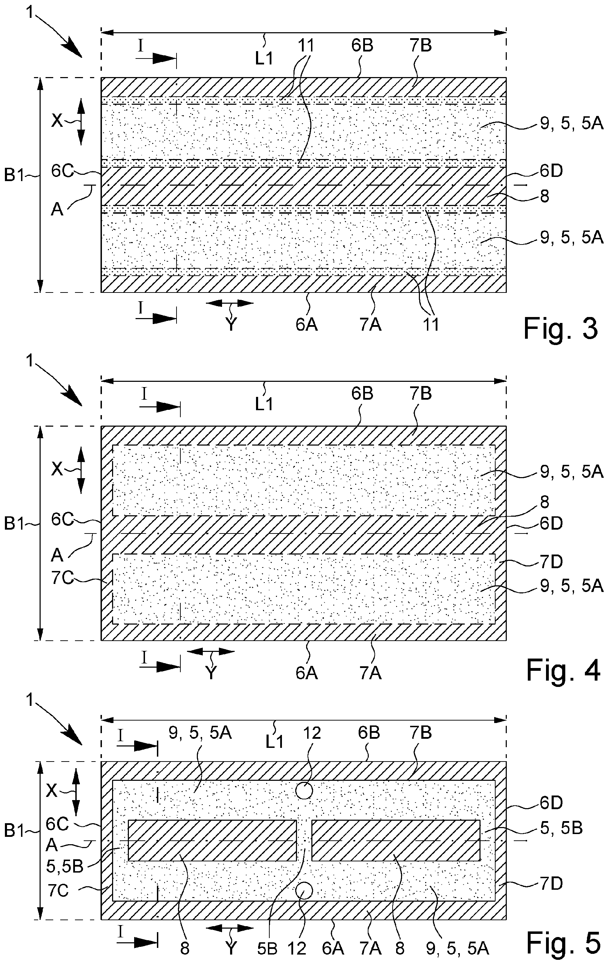

In a first and second embodiment, which are in particular shown in Figs. 3 and 4, the insulation element 1 comprises exactly two intermediate elements 5. In a third embodiment, which is in particular shown in Fig. 5, the insulation element 1 comprises exactly one intermediate element 5.

In particular when the insulation element 1 has exactly one intermediate element 5, the intermediate element 5 preferably comprises different sections 5A, the sections 5A in particular being arranged at a distance from one another, in particular in X direction.

The central region 8 is preferably arranged in X direction between at least two intermediate regions 9 and/or arranged between the first and second edges 6A, 6B and/or first and second edge regions 7A, 7B. In other words, the central region 8 is preferably arranged between two different or separate intermediate elements 5 or between different sections 5A of the same intermediate element 5, in particular in X direction and/or between the first and second edges 6A, 6B and/or first and second edge regions 7A, 7B.

Thus, between the first and second edges 6A, 6B and/or in X direction and/or in a cross-section transverse to the first and second edges 7A, 7B, the insulation element 1 preferably comprises a (first) intermediate region 9, the central region 8, and a (second) intermediate region 9, in particular in this order. More preferably, between the first and second edges 6A, 6B and/or in X direction and/or in a cross-section transverse to the first and second edges 7A, 7B, the insulation element 1 comprises the first edge region 7A, a (first) intermediate region 9, the central region 8, a (second) intermediate region 9, and the second edge region 7B, in particular in this order. This is in particular shown in Fig. 1.

The intermediate element 5 and/or intermediate regions 9 is/are preferably arranged at a distance from the first edge 6A and/or second edge 6B. Preferably, the intermediate element 5 and/or intermediate region 9 adjoins the first edge region 7A and/or second edge region 7B.

The insulation element 1 preferably has at least one connection layer 10.

The connection layer 10 is preferably arranged between the first outer layer 4Aand the second outer layer 4B. In particular, the connection layer 10 connects the first and second outer layers 4A, 4B to each other, in particular in the first edge region 7A, second edge region 7B and/or central region 8.

Further, the connection layer 10 is preferably arranged between the first outer layer 4A and the intermediate element 5 or a section 5A thereof or between the second outer layer 4B and the intermediate element 5 or a section 5A thereof. In particular, the connection layer 10 connects the first or second layer 4A, 4B to the intermediate element 5.

The connection layer 10 preferably extends from the first edge 6A or first edge region 7A to the second edge 6B or second edge region 7B. However, this is not mandatory. The connection layer 10 can also be arranged only in one or more regions between the first edge 6A or edge region 7A and the second edge 6B or edge region 7B.

The connection layer 10 is preferably made of an adhesive, in particular an adhesive foil, particularly preferably an adhesive polyolefin foil. In particular, the adhesive foil may be configured to melt when heated.

The insulation element 1 may comprise two or more connection layers 10, preferably wherein the two connection layers 10 are designed at least essentially identical. In this case, the above explanations concerning the connection layer 10 preferably apply to both connection layers 10.

When the insulation element 1 comprises two connection layers 10, it is preferred that one of the connection layers 10 is arranged between the first outer layer 4A and the intermediate element 5 and the other one of the connection layers 10 is arranged between the second outer layer 4B and the intermediate element 5. In particular, the connection layers 10 are adjoining each other and/or form a single connection layer 10 in the first edge region 7A, the central region 8 and/or the second edge region 7B.

In the first edge region 7A, the central region 8 and/or the second edge region 7B, the insulation element 1 in the Z direction preferably comprises or consists of the first outer layer 4A, optionally the connection layer(s) 10, and the second outer layer 4B, in particular in this order.

In the intermediate region 9, the insulation element 1 in the Z direction preferably comprises or consists of the first outer layer 4A, optionally a connection layer 10, the intermediate element 5 or a section 5A thereof, optionally a connection layer 10, and the second outer layer 4B, in particular in this order.

The outer layers 4A, 4B are preferably connected to each other by the connection layer(s) 10, in particular in the first edge region 7A, the central region 8 and/or the second edge region 7B.

The insulation element 1 has a width B1, a length L1 and a thickness D1.

Generally, the terms "width", "length" and "thickness" refer to the extension in the X, Y and Z direction, respectively, of the insulation element 1 or a part, region or component thereof.

At different positions and/or in different regions of the insulation element 1, the thickness D1 preferably has different values.

Preferably, the thickness D1 is reduced in the central region 8 and/or in the first and/or second edge region 7A, 7B. In particular, the thickness D1 in the central region 8 and/or in the first and/or second edge region 7A, 7B is less than the thickness D1 in the intermediate regions 9.

The first and second regions 7A, 7B preferably have the same thickness D1. The central region 8 preferably has the same thickness D1 as the first and/or second region 7A, 7B.

The thickness D1 in the intermediate regions 9 is preferably greater than the thickness D1 in the central region 8, first edge region 7A and/or second edge region 7B.

In particular, the thickness D1 in the intermediate regions 9 is at least 5 times, more preferably at least 10 times, in particular about 15 times the thickness D1 in the central region 8, first edge region 7A and/or second edge region 7B.

Different intermediate regions 9 preferably have the same thickness D1.

In the intermediate regions 9, the thickness D1 is preferably at least 1 mm, more preferably at least 3 mm, and/or at most 7 mm, more preferably at most 5 mm.

In the first edge region 7A, the second edge region 7B and/or the central region 8, the thickness D1 is preferably at least 0.1 mm, more preferably at least 0.2 mm, and/or at most 0.4 mm, more preferably at most 0.3 mm.

The intermediate element 5 preferably has a thickness of at least 1 mm, more preferably at least 2 mm, and/or at most 5 mm, more preferably at most 4 mm, in particular when the intermediate element 5 is made of a non-woven material. However, the intermediate element 5 may in principle also have thickness of less than 3 mm or less than 2 mm, in particular when the intermediate element is made of a woven material.

The first and/or second outer layer 4A, 4B preferably have/has a thickness of at least 0.075 mm, more preferably at least 0.1 mm, and/or at most 0.25 mm, more preferably at most 0.2 mm. Particularly preferred thicknesses of the first outer layer 4A and/or second outer layer 4B are about 120 µm or about 160 µm.

The intermediate element 5 preferably has at least 10 times, more preferably at least 15 times, in particular at least 20 times, most preferably at least 25 times the thickness of the first and/or second outer layer 4A, 4B.

According to a further aspect, which may also be realized independently, the insulation element 1 preferably comprises at least one ventilation channel 11.

The ventilation channel 11 preferably allows to discharge hot gases through the insulation element 1, for example in the case of thermal runaway of a battery 2 comprising the insulation element 1.

The ventilation channel 11 is arranged between the outer layers 4A, 4B. Preferably, the ventilation channel 11 adjoins and/or is delimited by the outer layers 4A, 4B and/or the connection layer(s) 10, at least partly.

Preferably, the ventilation channel 11 extends at least essentially in the X direction and/or Y direction and/or at least essentially in or parallel to the main extension plane of the insulation element 1. The ventilation channel 11 preferably extends at least essentially parallel to the first and/or second edge 6A, 6B.

The ventilation channel 11 is preferably arranged adjacent to the central region 8 and/or the intermediate element 5. In particular, the ventilation channel 11 is arranged between the intermediate element 5 and the central region 8, between the intermediate element 5 and the first edge 6A and/or first edge region 7A and/or between the intermediate element 5 and the second edge 6B and/or second edge region 7B. The intermediate region 9 preferably comprises the ventilation channel 11.

Particularly, the ventilation channel 11 is formed by a free space between the intermediate element 5, the first outer layer 4A and the second outer layer 4B.

The insulation element 1 preferably has several ventilation channels 11. The above explanations concerning the ventilation channel 11 preferably apply to all ventilation channels of the insulation element 1.

Particularly preferably, the insulation element 1 comprises a ventilation channel 11 between the first edge 6A and the intermediate element 5 adjacent the first edge 6A (i.e., the intermediate element 5 on the left in Fig. 1), a ventilation channel 11 between the central region 8 and the intermediate element 5 adjacent the first edge 6A, a ventilation channel 11 between the central region 8 and the intermediate element 5 adjacent the second edge 6B (i.e., the intermediate element 5 on the right in Fig. 1), and/or a ventilation channel 11 between the second edge 6B and the intermediate element 5 adjacent the second edge 6B.

The first and/or second outer layer 4A, 4B is/are preferably electrically insulating or made of an electrically insulating material.

Preferably, a material or component is "electrically insulating" in the sense of the present invention if it has a low electrical conductivity, in particular an electrical conductivity of less than 10⁻⁸ S/m or less than 10⁻¹⁰ S/m, and/or a high dielectric strength, in particular a dielectric strength of more than 1 kV/mm, preferably more than 2 kV/mm, in particular more than 3 kV/mm.

The dielectric strength is preferably measured according to IEC 60243-1:2013. The electrical conductivity is preferably measured according to DIN EN ISO 15091:2020-05.

Preferably, the insulation element 1 is electrically insulating in the first and/or second edge region 7A, 7B and/or in the central region 8. The first edge region 7A, second edge region 7B and7or central region 8 preferably have the same thermal and/or electrical insulation characteristics.

The insulation element 1 and/or the central region 8 preferably has/have an electrical resistance or short-time dielectric strength of at least 2 kV/mm, more preferably at least 3 kV/mm, in particular at least 4 kV/mm, particularly measured according to IEC 60243-1:2013.

The outer layer(s) 4A, 4B and/or the first and/or second edge region 7A, 7B preferably has/have an electrical resistance or short-time dielectric strength of at least 10 kV/mm, more preferably at least 15 kV/mm, in particular at least 20 kV/mm, particularly measured according to IEC 60243-1:2013.

At least one or both of the outer layers 4A, 4B preferably has/have an electrical resistance or short-time dielectric strength of at least 5 kV/mm, more preferably at least 7.5 kV/mm, in particular at least 10 kV/mm, particularly measured according to IEC 60243-1:2013.

The insulation element 1, the first and/or second outer layer 4A, 4B and/or the intermediate element 5 is/are preferably heat resistant, in particular up to at least 200°C, most preferred up to at least 250°C, 500°C or 1000°C.

The term "heat resistant" in the sense of the present invention is preferably used to describe the resistance or durability of a material or component to high temperatures or the temperatures mentioned. In particular, a material or component that is heat resistant up to a certain temperature is able to resist or remain unaffected and/or at least essentially maintains its properties when exposed to said temperature.

Preferably, a material or component, in particular the insulation element 1, the first and/or second outer layer 4A, 4B and/or the intermediate element 5, is heat-resistant if it meets the requirements of one of the insulation material classes according to DIN EN 60085:2008-08, in particular insulation material class F, H, N or R of this standard.

The first and/or second outer layer(s) 4A, 4B preferably comprise mica, in particular muscovite and/or phlogopite, and/or mica paper and/or vermiculite. The first and/or second outer layer(s) 4A, 4B are preferably configured as a mica foil. Preferably, the first and/or second outer layer(s) 4A, 4B are made of or comprise scrim-reinforced mica, the scrim preferably being made of glass fibers.

The first and/or second outer layer(s) 4A, 4B preferably has an area density and/or mica content of at least 80 g/m², more preferably at least 100 g/m², and/or at most 240 g/m², more preferably at most 200 g/m², in particular about 120 g/m² or about 160 g/m².

Preferably, the first outer layer 4A and the second outer layer 4B are made of the same material. However, this is not mandatory.

In particular, at least one of the outer layers 4A, 4B may comprise or be made of a gas-permeable material.

Preferably, a material or component is "gas-permeable" in the sense of the present invention if it has a gas-permeability of at least 25 mm/s at a differential pressure of 200 Pa. The gas-permeability is preferably determined according to ISO 9073-15:2007-07 or DIN EN ISO 9237:1995-12.

At least one of the outer layers 4A, 4B may comprise or be made of a non-woven or woven fabric, in particular a glass fiber fabric or woven glass fiber fabric. The glass fibers may be made of E-glass and/or S-glass.

In a preferred example, one of the outer layers 4A, 4B comprises mica and/or is configured as a mica foil and the other one of the outer layers 4A, 4B is made of a glass fiber fabric, in particular a woven glass fiber fabric.

The intermediate element 5 is preferably made of a textile material, in particular a nonwoven fabric. In principle, the intermediate element 5 may also be made of a woven material or be a woven mat/fabric.

Preferably, the intermediate element 5 is made of a thermally insulating material.

Preferably, a material or component is "thermally insulating" in the sense of the present invention if it has a low thermal conductivity, in particular thermal conductivity of less than 0.1 W/(m.K) at a temperature of 25° C.

The intermediate element 5 is preferably a mat, fiber mat, needle mat, stitch-bonded mat and/or non-woven mat.

In particular, the intermediate element 5 comprises or is made of silicate fibers and/or glass fibers and/or a mixture thereof. The glass fibers are preferably made of E-glass and/or S-glass. As an alternative or in addition, some or all fibers of the intermediate element 5 may be made of (fused) quartz or have a silica content of at least or more than 99.9 % or 99.95 %.

The intermediate element 5 preferably has an area density of at least 200 g/m², more preferably at least 400 g/m², and/or at most 1000 g/m², more preferably at most 800 g/m², in particular about 600 g/m².

The area density of the intermediate element 5 is preferably higher than the area density of the first and/or second outer layer 4A, 4B. In particular, the area density of the intermediate element 5 is at least three times the area density of the first and/or second outer layer 4A, 4B.

The insulation element 1 preferably has an area density of at least 300 g/m², more preferably at least 500 g/m², and/or at most 1400 g/m², more preferably at most 1200 g/m2.

In the following, further properties of the insulation element 1 are in particular explained with reference to Figs. 3 to 5. In Figs. 3 to 5, the line I-I each indicates the cross-section shown in Fig. 1.

The insulation element 1 preferably has a central and/or symmetry axis A, in the following briefly denoted as axis A. Preferably, the insulation element 1 is mirror symmetric with respect to the axis A. Preferably, the axis A runs in Y direction and/or through the central region 8.

The insulation element 1 preferably has a third edge 6C and a fourth edge 6D. The third and fourth edges 6C, 6D in particular delimit the insulation element 1 in the Y direction. The third and fourth edges 6A, 6B are arranged on opposite sides of the insulation element 1, in particular on opposite sides in the Y direction.

The first edge 6A and the second edge 6B are preferably linear and/or parallel to one another. Further, the third edge 6C and the fourth edge 6D are preferably linear, parallel to one another and/or perpendicular to the first and/or second edges 6A, 6B.

As shown in Figs. 3 to 5, the insulation element 1 is preferably at least essentially rectangular, in particular in its main extension plane.

The insulation element 1 has a width B1 and a length L1.

However, the shape of the insulation element 1 can also deviate from a rectangular shape. In this case, the length L1 is preferably a maximal length and/or the width B1 is preferably a maximal width of the insulation element 1.

The length L1 is preferably greater than the width B1. The width B1 and length L1 are preferably a multiple of the thickness D1 or maximal thickness D1.

The width B1 is preferably at least 50 cm, more preferably at least 60 cm, and/or at most 100 cm, more preferably at most 80 cm.

The length L1 is preferably at least 100 cm, more preferably at least 150 cm, and/or at most 250 cm, more preferably at most 150 cm.

The first and and/or second edge region 7A, 7B have a width B7. The width B7 is preferably at least 2 cm, more preferably at least 4 cm, and/or at most 12 cm, preferably at most 10 cm, most preferably between 6 cm and 8 cm.

Preferably, the first edge region 7A and the second edge region 7B have the same width B7.

The central region 8 has a width B8. The width B8 is preferably at least 80 mm, more preferably at least 10 cm, and/or at most 16 cm, more preferably at most 14 cm, in particular about 12 cm.

The width B8 of the central region 8 is preferably greater than the width B7 of the first and and/or second edge region 7A, 7B.

The intermediate regions 9 have a width B9. The width B9 is preferably at least 12 cm, more preferably at least 15 cm, and/or at most 24 cm, more preferably at most 21 cm, in particular about 18 cm.

The width B9 of the intermediate regions 9 is preferably greater than the width B7 of the first and and/or second edge region 7A, 7B and/or the width B8 of the central region 8. The width B9 of the intermediate regions 9 is preferably at least two times or at least three times the width B7 of the first and and/or second edge region 7A, 7B and/or the width B8 of the central region 8.

Preferably, the intermediate regions 9 have the same width B9.

The insulation element 1 can have on or more holes 12, in particular penetrating the insulation element 1 and/or all of its layers, in Z direction. The holes 12 may be punched holes. The holes 12 preferably extend from the first outer layer 4A to the second outer layer 4B. By the holes 12, correct positioning of the insulation element 1 within the battery 2 is preferably enhanced or ensured.

In the following, features of a first embodiment shown in Fig. 3 in a top view are explained in more detail.

In the first embodiment, the insulation element 1 comprises two separate intermediate elements 5, which are preferably identical. The intermediate elements 5 extend from the third edge 6C to the fourth edge 6D. In other words, the length of the intermediate elements 5 is preferably the same as the length L1 of the insulation element 1.

The insulation element 1, in particular the intermediate regions 9, is/are preferably open in the first embodiment, in particular at the third edge 6C and/or the fourth edge 6D. The outer layers 4A, 4B are preferably only partially connected to each other at the third edge 6C and/or the fourth edge 6D, in particular only connected in the central region 8 and/or the first and/or second edge region 7A, 7B. The outer layers 4A, 4B are preferably not connected to each other or separated from each other at the third edge 6C and/or the fourth edge 6D in the intermediate regions 9.

Preferably, the intermediate elements 5 and/or intermediate regions 9 are arranged between the outer layers 4A, 4B at the third and/or fourth edge 6C, 6D and/or the intermediate elements 5 and/or intermediate regions 9 are not arranged at a distance from the third and/or fourth edge 6C, 6D.

The ventilation channel(s) 11 is/are preferably fluidically connected to the outside of the insulation element 1 in the first embodiment. In particular, the ventilation channels 11 extend from the third edge 6C to the fourth edge 6D.

In the following, features of a second embodiment shown in Fig. 4 in a top view are explained in more detail. In particular, only differences to the first embodiment are explained. Thus, the explanations concerning the first embodiment preferably also apply to the second embodiment, if not stated otherwise or apparent from the context.

In the second embodiment, the insulation element 1 preferably has a third edge region 7C adjoining the third edge 6C and/or a fourth edge region 7A adjoining the fourth edge 6D. Preferably, the third edge region 7C extends along and/or parallel to the third edge 6C, in particular at least substantially the complete third edge 6C, and the fourth edge region 7D extends along and/or parallel to the fourth edge 6D, in particular at least substantially the complete fourth edge 6D.

The intermediate elements 5 and/or intermediate regions 9 are preferably arranged at a distance from the third and/or fourth edge 6C, 6D. In other words, the length of the intermediate elements 5 and/or intermediate regions 9 is preferably less than the length L1 of the insulation element 1.

Preferably, the intermediate elements 5 and/or intermediate regions 9 adjoin the third and/or fourth edge region 7C, 7D.

Preferably, the outer layers 4A, 4B are connected to each other at or along the third and/or fourth edge region 7C, 7D, in particular by the connection layer(s) 10.

The insulation element 1 is preferably closed at the third and/or fourth edge 7C, 7D.

The width of the third and/or fourth edge region 7C, 7D is preferably at least 2 cm, more preferably at least 4 cm, and/or at most 12 cm, preferably at most 10 cm, most preferably between 6 cm and 8 cm. In particular, the width of the third and/or fourth edge region 7C, 7D is the same as the width B7 of the first and/or second edge region 7A, 7B.

The width of the third and/or fourth edge region 7C, 7D is the extension of the edge region in Y direction and/or perpendicular to the third and/or fourth edge 6C, 6D.

In the following, features of a third embodiment shown in Fig. 5 in a top view are explained in more detail. In particular, only differences to the first and/or second embodiments are explained. Thus, the explanations concerning the first and/or second embodiments preferably also apply to the third embodiment, if not stated otherwise or apparent from the context.

Preferably, the third embodiment differs from the second embodiment in that the insulation element 1 has only or exactly one intermediate element 5, whereas the second embodiment has two intermediate elements 5. The other above explanations concerning the second embodiment, in particular concerning the third and fourth edge regions 7C, 7D, preferably also apply to the third embodiment.

In the third embodiment, the intermediate regions 9 are preferably formed by different sections 5A of the same intermediate element 5.

In the third embodiment, the intermediate element 5 preferably completely encloses the central region 8 und/or surrounds the central region 8 in X and Y direction.

The intermediate element 5 preferably has two longitudinal sections 5A and one or more, in the illustrative example three, transverse sections 5B connecting the longitudinal sections 5A. The longitudinal sections 5A and the transverse sections 5B preferably surround or enclose the central region 8.

In the third embodiment, the insulation element 1 preferably has two or more central regions 8, which are preferably separated by the transverse sections 5B. However, this is not mandatory.

Deviating from the example shown in Fig. 5, the insulation element 1 according to the third embodiment may have an insulation element 1 with only or exactly two transverse sections 5B, in particular only the left and right transverse sections 5B shown in Fig 5, and only or exactly one central region 8, which is in particular delimited and/or surrounded by the intermediate element 5 or its longitudinal and transverse sections 5A, 5B.

In the following, different methods for producing the insulation element 1 are described in more detail.

For producing the insulation element 1, a first electrically insulating material, a second electrically insulating material, an intermediate material and optionally a connection material are provided. These materials are in the following briefly denoted as raw materials.

The first outer layer 4A, the second outer layer 4B, the intermediate element(s) 5 and the connection layer(s) 10 are produced from the first electrically insulating material, the second electrically insulating material, the intermediate material and the connection material, respectively.

Thus, the intermediate material is preferably a textile and/or thermally insulating material, in particular a nonwoven, and/or the connection material is preferably an adhesive, in particular an adhesive foil.

According to a first production method, the raw materials are provided in the form of webs and/or on rolls, from which an insulation material is produced that is then cut into individual or several insulation elements 1.

In particular, the first production method is a lamination method.

Preferably, the insulation element 1 according to the first embodiment shown in Fig. 3 is produced by the first production method.

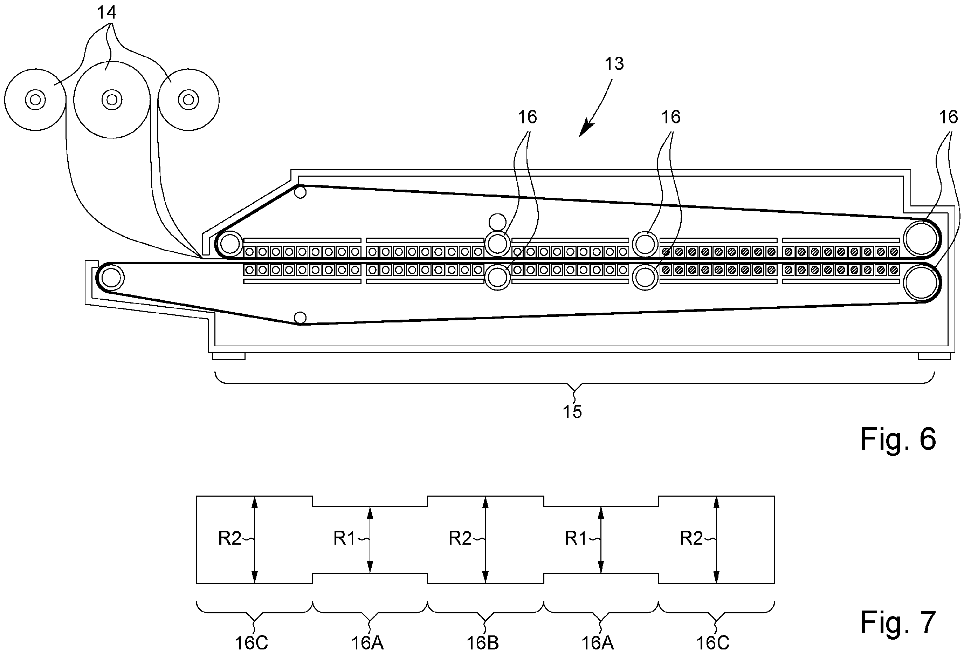

Fig. 6 shows a schematic representation of a lamination apparatus 13 for producing the insulation element 1.

The lamination apparatus 13 preferably has a plurality of rolls 14 on which the raw materials, i.e. the first and second electrically insulating materials, the intermediate material and optionally the connection material, are provided. The intermediate material is preferably provided on different rolls 14 and/or in the form of separate webs in order to form separate insulation elements 5 in the insulation element 1.

Further, the lamination apparatus 13 has a calender 15 comprising several calender rolls 16, which are preferably provided as pairs of calender rolls 16.

At least some of the calender rolls 16 may be heated or cooled.

At least one calender roll 16 preferably has different sections with different diameters R1, R2. Such a calender roll 16 is shown as an example in Fig. 7.

In particular, at least one calender roll 16 has two intermediate sections 16A and a central section 16B which is arranged between said intermediate sections 16A.

The intermediate sections 16A have a first diameter R1 and the central section 16B has a second diameter R2. The second diameter R2 is greater than the first diameter R1. In particular, the calender roll(s) 16 with different sections/diameters is/are configured to produce the insulation element 1 having different thicknesses in the central region 8 and the intermediate regions 9. Preferably, the intermediate sections 16A correspond to the intermediate regions 9 and the central section 16B corresponds to the central region 8.

Preferably, the width of the intermediate sections 16A corresponds to the width of the intermediate regions 9 and the width of the central section 16C corresponds to the width of the central region 8.

Further, said at least one calender roll 16 preferably has two edge sections 16C, which preferably have the same diameter as the central section 16B. The two edge sections 16C preferably correspond to and/or are configured to produce the first and second edge regions 7A, 7B of the insulation element 1. The width of the edge sections 16C preferably corresponds to the width of the first and second edge regions 7A, 7B.

For producing the insulation element 1, the raw materials are provided and introduced between the calender rolls 16 and transported through the calender 15, wherein the raw materials are pressed and/or connected to form an insulation material. In particular, the raw materials are laminated in the calender 15.

Preferably, the raw materials are first heated in the calender 15, in particular so that the connection materials for forming the connection layer(s) 10 melt. In particular, calender rolls 16 may be heated for heating the raw materials.

Afterwards, the materials may be cooled. This may be achieved by calender rolls 16 which are (actively) cooled or which are at least cooler than the previous heated calender rolls 16.

When leaving the lamination apparatus 13 and/or calender 15, the raw materials have preferably been connected to form a (layered) insulation material. The insulation material is in particular a web and may be rolled on a roll 17.

In a final step, the insulation element 1 or several insulation elements 1 are produced by cutting the web of the insulation material into separate insulation elements 1. This results in particular in insulation elements 1 according to the first embodiment, which are open at the third and/or fourth edges 6C, 6D.

According to a second production method, the raw materials are provided as punched or cut-out pieces, from which individual insulation elements 1 are produced, in particular one by one and/or by heat pressing the pieces.

In particular, the insulation element 1 according to the second and/or third embodiment shown in Fig. 4 and 5 is produced by the second production method. However, the insulation element 1 according to the first embodiment shown in Fig. 3 may also be produced by the second production method.

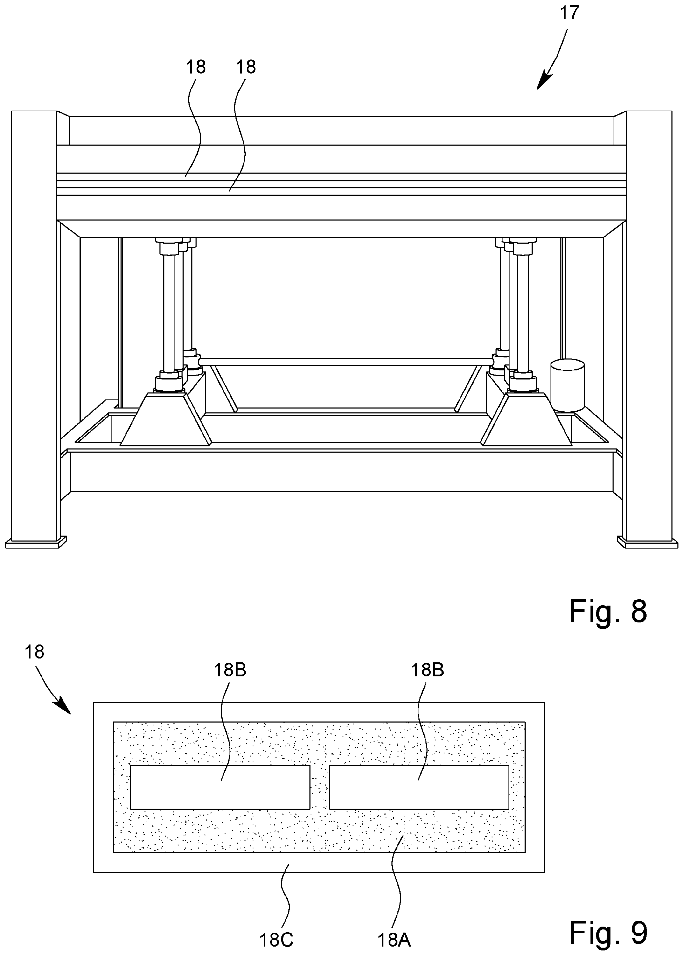

In the second production method, a heat press 17 for producing the insulation element 1 is provided. Fig. 8 shows a schematic representation of the heat press 17.

The heat press 17 has two opposite pressing surfaces 18, wherein at least one of the pressing surfaces 18 has a two intermediate sections 18A and a central section 18B. The central section 18B is arranged between the intermediate sections 18A.

A schematic top view of a pressing surface 18 is shown in Fig. 9.

The pressing surfaces 18 are at least substantially parallel to each other and movable relative to one another, in particular to press the insulation element 1 between them.

The distance between the central section 18B and the opposite pressing surface 18 is less than the distance between the intermediate sections 18A and the opposite pressing surface 18. In particular, the central section 18B corresponds to and/or is configured for producing the central region 8 of the insulation element 1 and the intermediate sections 18A correspond to and/or are configured for producing the intermediate regions 9 of the insulation element 1.

Further, said at least one pressing surface 18 preferably has an edge section 18C, which surrounds the intermediate sections 18A. Preferably, the distance between the edge section 18C and the opposite pressing surface 18 is the same as the distance between the central section 18C and the opposite pressing surface 18. The edge section 18C preferably corresponds to and/or is configured to produce the edge regions 7A, 7B, 7C, 7D of the insulation element 1.

The shape of the intermediate sections 18A, central section 18B and/or edge section 18C preferably corresponds to the shape of the intermediate regions 9, central region 7 and/or edge regions 7A, 7B, 7C, 7D, respectively, in particular of the second and/or third embodiment of the insulation element 1.

For producing the insulation element 1, the pieces are placed between the pressing surfaces 18 and pressed so that the insulation element 1, in particular according to the second or third embodiment, is produced. Preferably, the pressing surfaces 18 are heated when pressing.

Finally, according to a further aspect which may also be realized independently, the present invention also relates to a use of an insulation element 1 as described herein for thermal and/or electrical insulation of a battery 2, preferably as described herein.

Individual aspects of the present invention can be combined as desired, but also realized independently of each other.

### List of Reference Signs:

| | | | |
|---|---|---|---|
| 1 | Insulation element | 14 | Roll |
| 2 | Battery | 15 | Calender |
| 2A | Battery cells | 16 | Calender roll |
| 2B | Housing | 16A | Intermediate section of 16 |
| 2C | Cover | 16B | Central section of 16 |
| 3 | Electric vehicle | 16C | Edge section of 16 |
| 4A | First outer layer | 17 | Heat press |
| 4B | Second outer layer | 18 | Pressing surface of 17 |
| 5 | Intermediate element | 18A | Intermediate section of 18 |
| 5A | (Longitudinal) section of 5 | 18B | Central section of 18 |
| 5B | (Transverse) section of 5 | 18C | Edge section of 18 |
| 6A | First edge | | |
| 6B | Second edge | A | axis |
| 6C | Third edge | B1 | Width of 1 |
| 6D | Fourth edge | B7 | Width of 7A/7B |
| 7A | First edge region | B8 | Width of 8 |
| 7B | Second edge region | B9 | Width of 9 |
| 7C | Third edge region | D1 | Thickness of 1 |
| 7D | Fourth edge region | L1 | Length of 1 |
| 8 | Central region | R1 | Diameter of 16A |
| 9 | Intermediate region | R2 | Diameter of 16B |
| 10 | Connection layer | X | (First main) direction |
| 11 | Ventilation channel | Y | (Second main) direction |
| 12 | Hole | Z | Direction |
| 13 | Lamination apparatus | | |

## Claims

1. Insulation element (1) for thermal and/or electrical insulation of a rechargeable battery (2), in particular a lithium-ion battery, a sodium-ion battery and/or a traction battery for an electric vehicle (3),
wherein the insulation element (1) has a first outer layer (4A) and a second outer layer (4B), the outer layers (4A, 4B) being made of an electrically insulating material,
wherein the insulation element (1) has a first edge region (7A) adjoining a first edge (6A) of the insulation element (1) and a second edge region (7B) adjoining a second edge (6B) of the insulation element (1), the first and second edge regions (7A, 7B) being arranged on opposite sides of the insulation element (1), the outer layers (4A, 4B) preferably being connected to each other in the first and second edge regions (7A, 7B),
wherein the insulation element (1) has at least one intermediate element (5) which is arranged between the outer layers (4A, 4B), the intermediate element (5) being made of a textile and/or thermally insulating material, in particular a nonwoven,
**characterized**
**in that** the insulation element (1) has a central region (8) which is arranged between the first edge region (7A) and the second edge region (7B), wherein the outer layers (4A, 4B) are connected to each other in the central region (8) and wherein the central region (8) is arranged between two different sections (5A) of the intermediate element (5) or between two intermediate elements (5) in a cross-section transverse to the first and second edges (6A, 6B), and/or
**in that** the insulation element (1) has a central region (8) which is arranged between the first edge region (7A) and the second edge region (7B), wherein a thickness (D1) of the insulation element (1) is reduced in the central region (8), and/or
**in that** the insulation element (1) has at least one ventilation channel (11) arranged between the outer layers (4A, 4B).

2. Insulation element according to claim 1, **characterized in that** at least one of the outer layers (4A, 4B) comprises mica, at least one of the outer layers (4A, 4B) comprises or is formed by a gas-permeable material and/or a woven glass fiber material and/or the first outer layer (4A) and the second outer layer (4B) are made of the same material.

3. Insulation element according to claim 1 or 2, **characterized in that** the intermediate element (5) is a stitch-bonded mat and/or non-woven mat.

4. Insulation element according to one of the preceding claims, **characterized in that** the intermediate element (5) comprises or is made of silicate fibers and/or glass fibers.

5. Insulation element according to one of the preceding claims, **characterized in that** in an intermediate region (9) comprising the intermediate element (5) or a section (5A) thereof, the insulation element (1) is thicker than in the central region (8), preferably wherein the thickness (D1) of the insulation element (1) in the intermediate region (9) is at least 5 times, more at least 10 times, in particular about 15 times the thickness (D1) of the insulation element (1) in the central region (8).

6. Insulation element according to one of the preceding claims, **characterized in that** the first outer layer (4A) and/or the second outer layer (4A) has/have a thickness of at most or less than 1 mm, preferably at most or less than 0.5 mm, in particular at most or less than 0.25 mm, most preferred at most or less 0.2 mm, preferably wherein the first outer layer (4A) and the second outer layer (4B) have the same thickness.

7. Insulation element according to one of the preceding claims, **characterized in that** the intermediate element (5) is thicker than the first outer layer (4A) and/or the second outer layer (4B) and/or the intermediate element (5) has a thickness of at least or more than 1 mm, preferably at least or more than 2 mm, in particular at least or more than 3 mm, most preferred about 3.5 mm.

8. Insulation element according to one of the preceding claims, **characterized in that** the insulation element (1) comprises at least one connection layer (10) connecting the outer layers (4A, 4B) to each other and/or connecting the intermediate element (5) to at least one of the outer layers (4A, 4B), preferably wherein the connection layer (10) is formed by an adhesive foil, in particular an adhesive polyolefin foil.

9. Insulation element according to one of the preceding claims, **characterized in that** the ventilation channel (11) is arranged between the intermediate element (5) and the central region (8) and/or **in that** the ventilation channel (11) extends parallel to the outer layers (4A, 4B) and/or parallel to a main extension plane of the insulation element (1).

10. Insulation element according to one of the preceding claims, **characterized in that** the ventilation channel (11) is formed by a free space between the first outer layer (4A), the second outer layer (4B) and the intermediate element (5).

11. Insulation element according to one of the preceding claims, **characterized in that** the insulation element (1) has several ventilation channels (11).

12. Insulation element according to one of the preceding claims, **characterized in that** the insulation element (1) extends along a first main direction (X) from the first edge (6A) to the second edge (6B) and a second main direction (Y) perpendicular to the first main direction (X), wherein the insulation element (1) has a third edge (6C) and a fourth edge (6D), which are arranged on opposite sides of the insulation element (1) in the second main direction (Y), wherein the insulation element (1) is open and/or the intermediate element (5) is arranged between the outer layers (4A, 4B) at one or both of the third and fourth edges (6C, 6D).

13. Insulation element according to one of the preceding claims, **characterized in that** the insulation element (1) is at least essentially flat, planar, sheet-like and/or mat-like and/or has an at least essentially rectangular shape.

14. Rechargeable battery (2), in particular lithium-ion battery, sodium-ion battery and/or traction battery for an electric vehicle (3), **characterized in that** the battery (2) comprises an insulation element (1) according to one of the preceding claims, preferably wherein the insulation element (1) is arranged between a housing (2B) of the battery (2) and at least one cell (2A) and/or module of the battery (2) and/or wherein the insulation element (1) is arranged between different cells (2A) and/or modules of the battery (2).

15. Method for producing an insulation element (1) according to one of claims 1 to 13,
wherein a first electrically insulating material, a second electrically insulating material and an intermediate material are provided, wherein the intermediate material is a textile and/or thermally insulating material, in particular a nonwoven,
wherein the first outer layer (4A) is made from the first electrically insulating material, the second outer layer (4B) is made from the second electrically insulating material and the intermediate element (5) is made from the intermediate material, and wherein
a) a lamination apparatus (13) having a calender (15) with several calender rolls (16) is provided, wherein at least one of the calender rolls (16) has two intermediate sections (16A) each having a first diameter (R1) and a central section (16B) having a second diameter (R2), wherein the second diameter (R2) is greater than the first diameter (R1) and the central section (16B) is arranged between said intermediate sections (16A), wherein the intermediate material is provided in two separate webs, and wherein the first and second electrically insulating materials and the webs of the intermediate material are introduced between the calender rolls (16) and laminated so that the insulation element (1) is produced, and/or
b) the first electrically insulating material, second electrically insulating material, first intermediate material and second intermediate material are provided as punched or cut-out pieces, wherein a heat press (17) having two opposite pressing surfaces (18) is provided, wherein at least one of the pressing surfaces (18) has two intermediate sections (18A) and a central section (18B), wherein the central section (18B) is arranged between the intermediate sections (18A), wherein the distance between the central section (18B) and the opposite pressing surface (18) is less than the distance between the intermediate sections (18A) and the opposite pressing surface (18), and wherein the pieces are placed between the pressing surfaces (18) and pressed so that the insulation element (1) is produced.
